# EUROPÄISCHE PATENTANMELDUNG

(11) **EP 4 123 206 A1**
(43) Veröffentlichungstag der Anmeldung: **25.01.2023**
(21) Anmeldenummer: 22186573.6
(22) Anmeldetag: 22.07.2022
(51) Int. Cl.: F16L 5/04, A62C 2/06, F16L 5/12

(54) **BRANDSCHUTZSYSTEM ZUR ABSCHOTTUNG VON DURCH DECKEN GEFÜHRTE KUNSTSTOFFROHRLEITUNGEN IN SCHWERKRAFTRICHTUNG**

(30) Priorität: 22.07.2021 DE 102021207902
(71) Anmelder: UBA Tec Europa GmbH, 10245 Berlin (DE)
(72) Erfinder: Wollborn, Burkhard, 20251 Hamburg (DE)
(74) Vertreter: Obst, Bernhard

(57) **Zusammenfassung**

Die Erfindung betrifft ein Brandschutzsystem (1) zur feuerbeständigen und rauchdichten Abschottung in Schwerkraftrichtung (70) von Durchführungen (110) durch Bauteile (100) von Gebäuden, durch welche, insbesondere senkrecht, eine miteinander verbundene Rohrabschnitte (10, 20) umfassende Kunststoffrohrleitung geführt ist, umfassend: ein Verbindungsstück (2), welches zur Verbindung mindestens zweier der Rohrabschnitte (10, 20) ausgebildet ist und dabei die zwei der Rohrabschnitte (10, 20) voneinander beabstandet, wobei das Verbindungsstück (2) ein nichtbrennbares Gehäuse (5) mit mindestens zwei voneinander beabstandeten Aufnahmeabschnitten (31, 32) zum Aufnehmen der mindestens zwei der Rohrabschnitte (10, 20) und einem hierzwischen angeordneten Verschlussabschnitt (33) und in dem Gehäuse (5) angeordnetes unter Wärmeeinwirkung aufschäumendes, intumeszierendes Brandschutzmittel (4), welches das Verbindungsstück (2) im Brandfall verschließt, umfasst, wobei das Verbindungsstück (2) zumindest teilweise mit einem der Aufnahmeabschnitte (31, 32) zum Ausbilden einer feuerbeständigen und rauchdichten Abschottung in eine Oberseite (101) des Bauteils (100) des Gebäudes eingefügt ist und zugleich Wärmeeinleitungsmittel mit einem Raum (200) über der Oberseite (101) des Bauteils (100) des Gebäudes in Kontakt sind, um bei einem Brandfall in dem Raum (200) die Wärmeeinwirkung auf das aufschäumende, intumeszierende Brandschutzmittel (4) in dem Gehäuse (5) herbeizuführen.

## Beschreibung

Die Erfindung betrifft ein Brandschutzsystem zur feuerbeständigen und rauchdichten Abschottung in Schwerkraftrichtung von Durchführungen durch Bauteile von Gebäuden, insbesondere Geschossdecken, durch die Rohrleitungen geführt sind, die aus miteinander verbundenen brennbaren Rohrabschnitten gebildet sind, also insbesondere von Durchführungen, durch die Kunststoffrohrleitungen geführt sind.

Werden Rohre oder ähnliche Bauteile durch Wände oder Decken geführt, müssen diese so abgeschottet werden, dass für eine bestimmte Zeit weder Feuer noch Rauch von einem Abschnitt in den nächsten Abschnitt übertragen werden können. Bei offenen Systemen wie Hausentwässerungsleitungen, können heiße Rauchgase in die Rohrleitung eindringen und dadurch das raumabschließende Bauteil überqueren. Um das zu vermeiden werden besondere Systeme in der Rohrleitung eingebaut, die diese im Brandfall verschließen.

Die DE 10 2009 048 651 A1 beschreibt ein Brandschutzsystem zur Abschottung und feuerbeständigen, rauchdichten Durchführung von Rohren, Kabeln, Leitungen und/oder anderen Bauteilen durch Wände und/oder Decken und/oder andere Bauteile von Gebäuden, bestehend aus einem Verbindungsstück, welches zur Verbindung zweier Rohrabschnitte ausgebildet ist und dabei die Rohrabschnitte voneinander beabstandet, weiter einer Dichtungsmanschette sowie einem in einem nichtbrennbaren Gehäuse angeordneten unter Hitzeeinwirkung aufschäumenden, intumeszierenden Brandschutzmittel, welches das Verbindungsstück im Brandfall verschließt, wobei das System Mittel aufweist, welche im Brandfall zur Gewichtsaufnahme der an das System angeschlossenen Rohre und/oder anderen Bauteile ausgebildet sind. Das beschriebene Brandschutzsystem ist geeignet mit nicht brennbaren Rohren, insbesondere Gussrohren, oder mit einem nicht brennbaren und einem brennbaren Rohr eingesetzt zu werden.

Das Augenmerk ist stets darauf gerichtet, eine Brandausbreitung entgegen der Schwerkraftrichtung, also nach oben, zu verhindern. Es ist somit insbesondere für Fallrohre mit einem Übergang in Fall- oder Schwerkraftrichtung von einem Gussrohr auf ein anderes Gussrohr oder von einem Gussrohr auf ein Kunststoffrohr vorgesehen. Die Anordnung bei einer Abschottung einer Deckendurchführung ist stets an der Unterseite der Decke vorgesehen.

Neben dem aus der DE 10 2009 048 651 A1 bekannten Verbinder sind Brandschutzmanschetten bekannt, die um Kunststoffrohre an Durchführungen eingesetzt werden. Die Anordnung erfolgt bei Durchführungen durch Decken erneut auf der Unterseite der Decke. Diese Brandschutzmanschetten umschließen das Kunststoffrohr und werden von unten an der Decke befestigt, insbesondere verschraubt. In den Brandschutzmanschetten ist ein aufschäumendes intumeszierendes Brandschutzmittel angeordnet, das bei und nach dem Durchbrennen des Kunststoffrohres die Durchführung verschließt.

Brandschutzversuche in neuer Zeit haben gezeigt, dass insbesondere beim Einsatz von Rohrleitungen oder Rohrleitungsabschnitten, die ausschließlich aus Kunststoffrohrabschnitten gebildet sind und durch Decken, insbesondere senkrecht, geführt sind, auch die Gefahr der Brandausbreitung nach unten, d.h. in Schwerkraftrichtung, existiert.

Der Erfindung liegt daher die Aufgabe zugrunde, ein Brandschutzsystem für Durchführungen von brennbaren Rohren anzugeben, welches einen Schutz gegen die Brandausbreitung nach unten, d.h. in Schwerkraftrichtung, durch Bauteile von Gebäuden bietet, die quer, insbesondere senkrecht zur Schwerkraftrichtung, orientiert sind.

Die Erfindung wird durch ein Brandschutzsystem mit den Merkmalen des Anspruchs 1 gelöst. Vorteilhafte Ausgestaltungen der Erfindung ergeben sich aus den Unteransprüchen.

Insbesondere wird ein Brandschutzsystem zum feuerbeständigen und rauchdichten Abschotten von einer Durchführung durch ein quer zur Schwerkraftrichtung orientiertes Bauteil eines Gebäudes in Schwerkraftrichtung, durch welche, insbesondere senkrecht, eine miteinander verbundene Rohrabschnitte umfassende Kunststoffrohrleitung geführt ist, wobei das Brandschutzsystem umfasst:
ein Verbindungsstück, welches zur Verbindung mindestens zweier der Rohrabschnitte ausgebildet ist und dabei die mindestens zwei der Rohrabschnitte voneinander beabstandet,
wobei das Verbindungsstück
ein nicht brennbares Gehäuse mit mindestens zwei voneinander beabstandeten Aufnahmeabschnitten zum Aufnehmen der mindestens zwei der Rohrabschnitte und einem hierzwischen angeordneten Verschlussabschnitt und
ein in dem Gehäuse angeordnetes unter Wärmeeinwirkung aufschäumendes, intumeszierendes Brandschutzmittel, welches das Verbindungsstück im Brandfall verschließt, umfasst,
wobei das Verbindungsstück zumindest teilweise mit einem der Aufnahmeabschnitte zum Ausbilden einer feuerbeständigen und rauchdichten Abschottung in eine Oberseite des Bauteils des Gebäudes eingefügt ist und zugleich Wärmeeinleitungsmittel mit einem Raum über der Oberseite des Bauteils des Gebäudes in Kontakt sind, um bei einem Brandfall in dem Raum über und angrenzend an das Bauteil des Gebäudes die Wärmeeinwirkung auf das aufschäumende, intumeszierende Brandschutzmittel in dem Gehäuse herbeizuführen.

Aufgrund der Trennung der Rohrabschnitte in dem Verbindungsstück, kann das intumeszierende Brandschutzmittel einen Querschnitt des Verbinders gut und zügig verschließen, sobald im Brandfall im Raum über dem beispielsweise als Decke ausgebildeten Bauteil des Gebäudes eine hohe Wärmeentwicklung einsetzt. Die Wärmeeinleitungsmittel sorgen dafür, dass eine Auslösung des intumeszierenden und aufschäumenden Effekts im Brandfall zügig auftritt und die Brandabschottung nach unten bewirkt. Da das Verbindungsstück feuerbeständigen und rauchdicht in die Decke an deren Oberseite, also quasi in den Boden des darüberliegenden Raums, eingefügt ist, bildet die Decke eine zuverlässige Brandabschottung, die auch abtropfende Rohrbestandteile an einem Durchtritt hindert.

Bevorzugt ist der Verschlussabschnitt des Gehäuses des Verbindungsstücks als Wärmeeinleitungsmittel ausgebildet. Dieser Verschlussabschnitt ist hierfür vorzugsweise in thermischem Kontakt mit dem intumeszierenden Brandschutzmittel, welches vorzugsweise ganz oder überwiegend in dem Verschlussabschnitts des Gehäuses angeordnet ist.

Um im normalen Gebrauch, d.h. im Nicht-Brandfall, eine zuverlässige fluiddichte Abdichtung zu erreichen, weist vorzugsweise jeder der Aufnahmeabschnitte eine Dichtungsaufnahme zum fluiddichten Abdichten eines in dem jeweiligen Aufnahmeabschnitt aufgenommenen der mindestens zwei der Rohrabschnitte im Nicht-Brandfall auf.

Eine besonders gute Abdichtung wird mit Ausführungsformen erreicht, bei denen die Dichtungsaufnahmen im Inneren des Verbindungsstücks mittels einer durchgehenden Dichtungsmanschette ausgebildet sind. Da bei dieser Ausführungsform beide der mindestens zwei der Rohrabschnitte in derselben Dichtungsmanschette, wenn auch beabstandet, angeordnet werden, ist eine zuverlässige Abdichtung immer gewährleistet.

Um Beschädigungen der Dichtungsmanschette beispielsweise bei unsachgemäßen Reinigungsarbeiten zu verhindern, kann in einem Abschnitt zwischen den Aufnahmeabschnitten ein dünnwandiges Schutzrohr vorgesehen sein, das die Dichtungsmanschette innen schützt. Da dieses keine konstruktiven Kräfte aufnehmen muss, kann dieses Schutzrohr sehr dünnwandig ausgebildet sein, und aus einem Material gefertigt sein, dessen Erweichungstemperatur oder Schmelztemperatur im Bereich der Temperatur liegt, bei der der aufschäumende, intumeszierende Effekt des Brandschutzmittels einsetzt. Hierdurch wird sichergestellt, dass das dünnwandige Schutzrohr ein Verschließen des Querschnitts des Verbindungstücks nicht behindert.

Eine sehr zuverlässige Wärmeeinleitung im Brandfall wird erreicht, wenn die Wärmeeinleitungsmittel brennbares Material umfassen, welches außen anliegend an das Gehäuse so angeordnet ist, dass es im Brandfall entflammbar ist bzw. entflammt wird. Das Wärmeeinleitungsmittel wird somit im Brandfall in Brand gesetzt und die dabei freiwerdende Wärme in das Gehäuse eingeleitet, um den aufschäumenden und intumeszierenden Effekt des Brandschutzmittels auszulösen.

Bei einer Weiterbildung ist vorgesehen, dass das brennbare Material zumindest teilweise mit dem Verbindungsstück in die Oberseite des Bauteils des Gebäudes eingefügt ist. Dieses bietet den Vorteil, dass das brennbare Material, welches ein Wärmeeinleitungsmittel ist, gut fixiert ist. Darüber hinaus ist es möglich, dass Verbindungsstück über eine größere Strecke, d. h. tiefer, in die Oberseite des Bauteils des Gebäudes, beispielsweise eine Oberseite einer Geschossdecke einzufügen. Dies bietet eine größere und bessere Abdichtung des Verbindungsstücks mit dem Bauteil des Gebäudes. Bei langer Branddauer wird die Hitzeeinwirkung auf das Gehäuse des Verbindungsstücks reduziert.

Alternativ und/oder zusätzlich können die Wärmeeinleitungsmittel ein oder mehrere Wärmeleitelemente umfassen, die an dem Gehäuse des Verbindungsstücks ausgebildet sind und/oder anliegend an das Gehäuse des Verbindungsstücks angeordnet sind und sich jeweils in den Raum oberhalb der Oberseite des Bauteils des Gebäudes erstrecken. Die Wärmeleitelemente nehmen im Brandfall durch den Brand freigesetzte Wärme auf und leiten diese in das Gehäuse ein und befördern so eine zeitgerechte und frühzeitige Auslösung des aufschäumenden, intumeszierenden Effekts des Brandschutzmittels.

Bei einigen Ausführungsformen sind die Wärmeleitelemente in die Gehäusewand eingearbeitet oder an dieser befestigt. Dieses bietet den Vorteil, dass die Wärmeleitelemente immer richtig angeordnet sind.

Um die Wärmeleitelemente flexibel angepasst an den jeweiligen Einbauort wählen zu können, können die Wärmeleitelemente auch getrennt von dem Gehäuse ausgebildet sein und anliegend an das Gehäuse angeordnet werden.

Bei einer Ausführungsform umfassen die Wärmeleitelemente ein Rohr und/oder eine Manschette und/oder eine Tafel, aus einem Wärmeleitenden Material, insbesondere aus einem Metall. Insbesondere Metalle, die eine gute elektrische Leitfähigkeit aufweisen, besitzen auch eine gute Wärmeleitende Eigenschaft.

Besonders bevorzugt sind Ausführungsformen, bei denen das Wärmeleitende Material der Wärmeleitelemente eine höhere Wärmeleitfähigkeit als das Material des Gehäuses aufweist. Hierdurch kann eine schnellere Einleitung von Wärme im Brandfall erfolgen als bei Ausführungsformen ohne Wärmeleitelemente.

Um eine zuverlässige Auslösung im Brandfall zu erreichen ist bei einer Ausführungsform vorgesehen, dass der Verschlussabschnitt vollständig oberhalb der Oberseite des Bauteils des Gebäudes angeordnet ist. Insbesondere wenn keine weiteren Wärmeeinleitungsmittel verwendet werden, kann so eine zuverlässige und schnelle Brandabschottung gewährleistet werden.

Eine gute und zuverlässige Verbindung der Rohrabschnitte wird erreicht, wenn zumindest einer der mindestens zwei Aufnahmeabschnitte als metallischer Spannverbinder ausgebildet ist, in dem ein entsprechend aufgenommener der Rohrabschnitte mittels Befestigungsmitteln fixier- und/oder verspannbar ist.

Einige Ausführungsformen können so ausgebildet sein, dass zwei der mindestens zwei Aufnahmeabschnitte als metallische Spannverbinder ausgebildet sind und beide Rohrabschnitte somit mit dem Verbindungsstück in fixierender Weise verbunden sind.

Andere Ausführungsformen sehen vor, dass zumindest einer der mindestens zwei Aufnahmeabschnitte als Steckverbinder ausgebildet ist. Diese Ausführungsformen ermöglichen eine besonders einfache Montage. Bei einigen Ausführungsformen sind alle der mindestens zwei Aufnahmeabschnitte als Steckverbinder ausgebildet.

Es sind Ausführungsformen möglich, bei denen einer der mindestens zwei Aufnahmeabschnitte als Steckverbinder und ein anderer der mindestens zwei Aufnahmeabschnitte als Spannverbinder ausgebildet sind.

Um eine Weiterleitung der Wärme von dem Gehäuse auf das Brandschutzmittel zu beschleunigen, ist bei einer Ausführungsform vorgesehen, dass zumindest abschnittsweise zwischen dem Gehäuse und dem Brandschutzmittel, d.h. dem aufschäumenden und intumeszierenden Material, ein Wärmeübertragungselement ausgebildet ist, welches aus einem Material besteht, welches eine höhere Wärmeleitfähigkeit als das Material des Gehäuses aufweist. Besonders bevorzugt ist das Wärmeübertragungselement aus Kupfer. Kupfer bietet den Vorteil, dass es im Vergleich zu den meisten anderen Blechmaterialien wie Stahlblech, aus denen das Gehäuse gefertigt wird, weicher ist und sich gut an Unebenheiten des Gehäuses anpasst. Vorzugsweise ist das Wärmeübertragungselement umlaufend in dem Verschlussabschnitt, in dem das Brandschutzmittel angeordnet ist, um das Brandschutzmittel angeordnet und sowohl in thermischem Kontakt mit dem Gehäuse als auch mit dem Brandschutzmittel.

Bei einer Ausführungsform ist daher vorgesehen, dass zumindest in einem Abschnitt des Verschlussabschnitts ein Wärmeübertragungselement zwischen dem Gehäuse und dem Brandschutzmittel ausgebildet ist, welches in thermischem Kontakt mit einer Innenseite des Gehäuses und dem Brandschutzmittel ist, wobei eine Wärmeleitfähigkeit des Wärmeübertragungselements größer als die Wärmeleitfähigkeit des Materials des Gehäuses ist.

Um Wärme aufzunehmen und weiterzuleiten, kann sich das Wärmeübertragungselement auch in axialer Richtung über den Verschlussabschnitt hinaus erstrecken, um Wärme von gößeren Flächsnabschnitten des Gehäuses schneller in den Verschlussabschnitt und zu dem Brandschutzmittel weiterzuleiten. Besonders bevorzugt erstreckt sich das Wärmeübertragungselement axial in den Aufnahmeabschnitt, der in den Raum oberhalb des Bauteils des Gebäudes ragt.

Eine Ausführungsform sieht daher vor, dass sich das Wärmeübertragungselement in axialer Richtung des Gehäuses über den Verschlussabschnitt hinaus erstreckt.

Bei einer Ausführungsform ist das Wärmeübertragungselement als Einsatz zwischen das Blech des Gehäuses und das intumeszierende Material eingefügt.

Eine Ausführungsform sieht daher vor, dass das Wärmeübertragungselement aus Kupfer ist. Kupfer weist eine besonders gute Wärmeleitfähigkeit auf.

Vorzugsweise ist das Wärmeübertragungselement als Blech mit hoher Wärmeleitfähigkeit, besonders bevorzugt als Kupferblech ausgebildet. Dieses wird vorzugsweise umlaufend um den Verschlussbereich im Inneren des Gehäuses anliegend an das Gehäuse angeordnet.

Eine Ausführungsform sieht vor, dass das Wärmeübertragungselement zumindest abschnittsweise als Blech ausgebildet ist.

Bei anderen Ausführungsformen ist das Gehäuse zumindest an einer Innenseite in dem Verschlussabschnitt mit dem Wärmeübertragungselement beschichtet, vorzugsweise galvanisch beschichtet.

Eine Ausführungsform sieht vor, dass das Wärmeübertragungselement zumindest abschnittsweise als Beschichtung zumindest einer Innenseite des Gehäuses ausgebildet ist.

Das Wärmeübertragungselement kann sowohl als Blech als auch als Beschichtung in Kombination ausgebildet sein.

Besonders bevorzugt ist das Gehäuse in axialer Richtung des Gehäuses betrachtet nur in einem Axialabschnitt zumindest an dessen Innenseite mit dem Wärmeübertragungselement beschichtet. Vorzugsweis in einem der Aufnahmeabschnitte bis zu dem Verschlussabschnitt und einschließlich des Verschlussabschnitts, in dem das Brandschutzmittel angeordnet ist. Hierdurch kann die Menge an benötigtem Material für das Wärmeübertragungselement minimiert werden. Das Ende des Axailabschnitts, das zumindest an der Innenseite mit dem Wärmeübertragungselement beschichtet ist, ragt in den Raum über der Oberseite des Bauteils des Gebäudes, das im Brandfall abgedichtet werden soll.

Der Axialabschnitt kann auch zusätzlich auf der Außenseite des Gehäuses mit dem Wärmeübertragungselement, insbesondere Kupfer, beschichtet sein. Dieses erleichtert die Fertigung des Gehäuses und steigert zugleich die Wärmeeinleitung im Brandfall. Die Fertigung wird erleichtert weil das Gehäuse beim Beschichten in ein galvanisches Bad getaucht werden kann.

Die Auslösezeit des Brandschutzsystems zum feuerbeständigen und rauchdichten Abschotten von einer Durchführung durch ein quer zur Schwerkraftrichtung orientiertes Bauteil eines Gebäudes in Schwerkraftrichtung zu verringern, kann die Auslösetemperatur des Brandschutzmittels möglichst niedrig gewählt werden. Vorzugsweise ist diese geringer als für vergleichbare Brandschutzsysteme, welche an einer Unterseite eines Bauteils zur Abdichtung entgegen der Schwerkraftrichtung, zum Beispiel an einer Unterseite einer Geschossdecke angeordnet werden, um im Brandfall im Raum unterhalb der Decke eine Brandausbreitung in obere Geschosse zu vermeiden.

Die Aktivierungstemperatur kann durch die Wahl des Blähgraphits und dessen Anteil am Brandschutzmaterial beeinflusst werden. Eine Steigerung des Blähgraphitanteils senkt die Temperatur, die benötigt wird, um die aufschäumende, intumeszierende Wirkung auszulösen. Bevorzugte Ausführungformen sehen daher einen hohen Blähgraphitanteil am Brandschutzmaterial vor.

Weitere Merkmale und Vorteile der vorliegenden Erfindung werden anhand der nachfolgenden bevorzugten, jedoch nicht beschränkenden Ausführungsbeispiele unter Bezugnahme auf die jeweiligen Zeichnungen verdeutlicht.

Es zeigen:
- Figur 1:: eine schematische Teilexplosions-Schnittdarstellung eines Brandschutzsystems mit einem teilweise in ein Bauteil eines Gebäudes eingefügten Verbindungsstück,
- Figur 2:: eine Ausführungsform des Brandschutzsystems unter Verwendung von brennbarem Material als Wärmeeinleitungsmittel,
- Figur 3a:: ein Brandschutzsystem mit Brandschutzfunktion im Betriebsfall,
- Figur 3b:: ein Brandschutzsystem mit Brandschutzfunktion im Brandfall, und
- Figur 4:: ein Brandschutzsystem mit an das Gehäuse des Verbindungsstücks angeformten Rippen als Wärmeeinleitungselemente, und
- Figur 4a:: eine schematische Draufsicht auf das Verbindungsstück nach Figur 4,und
- Figur 5:: ein Brandschutzsystem mit Brandschutzfunktion im Betriebsfall mit einem Wärmeübertragungselement in Form eines Kupferblechs, und
- Figur 6:: ein Brandschutzsystem mit Brandschutzfunktion im Betriebsfall mit einem Wärmeübertragungselement in Form einer Beschichtung.

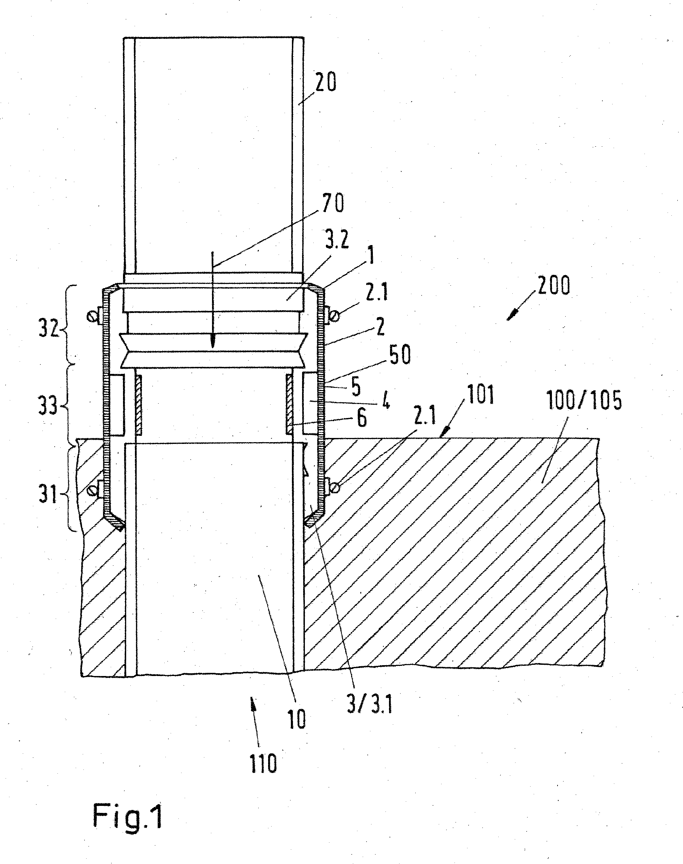

In der Figur 1 ist ein erfindungsgemäßes Brandschutzsystem 1 dargestellt. Das Brandschutzsystem 1 umfasst ein Verbindungsstück 2, welches zur Verbindung zweier Rohrabschnitte 10, 20 ausgebildet ist und dabei die Rohrabschnitte 10, 20 voneinander beabstandet. Weiter sind eine Dichtungsmanschette 3 sowie ein in einem nichtbrennbaren Gehäuse 5 angeordnetes unter Wärmeeinwirkung aufschäumendes, intumeszierendes Brandschutzmittel 4 vorgesehen, welches das Verbindungsstück 2 im Brandfall verschließt und eine Abschottung in Schwerkraftrichtung 70 bewirkt. Das Gehäuse 5 weist zwei Aufnahmeabschnitte 31, 32 und einen hierzwischen ausgebildeten Verschlussabschnitt 33 auf. In der gezeigten Darstellung ist der Rohrabschnitt 10 in einer Dichtungsaufnahme 3.1 der Dichtungsmanschette 3 angeordnet. Um die Ausgestaltung der Dichtungsaufnahme 3.2, die spiegelbildlich der Dichtungsaufnahme 3.1 gleicht, besser veranschaulichen zu können. ist der Rohrabschnitt 20 in einer noch nicht eingefügten Stellung gezeigt.

Bei dem Brandschutzsystem 1 ist das Verbindungsstück 2 zumindest teilweise mit einem der Aufnahmeabschnitte 31, 32 zum Ausbilden einer feuerbeständigen und rauchdichten Abschottung in eine Oberseite 101 eines Bauteils 100 eines Gebäudes eingefügt, dessen Durchführung 110 im Brandfall durch das Verbindungsstück 2 abgeschottet wird. Hierbei ist der Innenquerschnitt des Verbindungsstücks 2 durch das aufgeschäumte Brandschutzmittel 4 verschlossen. In der dargestellten Ausführungsform ist der Verschlussabschnitt 33 als Wärmeeinleitungsmittel 50 mit einem Raum 200 über der Oberseite 101 des als Decke 105 ausgebildeten Bauteils 100 in Kontakt. Findet in dem Raum 200 oberhalb des Bauteils 100 aufgrund eines Brandes eine Hitzeentwicklung statt, so wird Wärme durch das oder die Wärmeeinleitungsmittel 50 in das Verbindungsstück 2 eingeleitet, sodass zeitnah an die Entstehung des Brandes die aufschäumende und intumeszierende Wirkung des Brandschutzmittel 4 ausgelöst wird.

Bei der Dichtungsmanschette 3 handelt es sich um eine innenliegende durchgehende Dichtmanschette aus Gummi. In Bereich des Verschlussabschnitts 33, in dem die Rohrabschnitte beabstandet sind, kann in der Dichtungsmanschette 3 ein dünnwandiges Schutzrohr 6 ausgenommen sein, welches die Dichtungsmanschette 3 innen, z. B. bei Reinigungsarbeiten, schützt. An beiden Enden der Manschette sind die Dichtungsaufnahmen 3.1, 3.2 für die Rohre angeordnet. Umgeben wird die Dichtung durch das als Blechmantel ausgebildete Gehäuse 5 des Verbindungsstücks 2, welches mittels einer oder mehrerer Schrauben 2.1 zusammengezogen wird. Dadurch entstehen die Dichtwirkung und die Zugfestigkeit der Verbindung. Das zwischen den Rohrenden befindliche Gummiteil ist soweit verdickt, dass die Wandungen der Rohre ausgeglichen sind.

Das Verbindungsstück 2 kann dabei als gerades Bauteil, als T-Stück, Winkel oder Bogen oder als Reduzierstück ausgebildet sein.

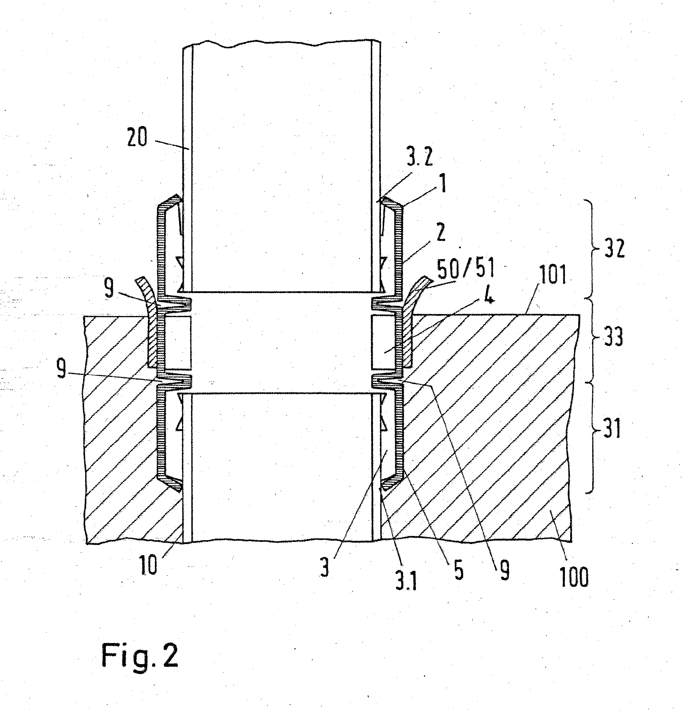

Bei der in Figur 1 dargestellten Ausführungsform des Verbindungsstücks 2 sind die Aufnahmeabschnitte 31, 32 als Spannverbinder ausgebildet. In anderen Ausführungsformen können die eine oder mehreren Schrauben 2.1 fehlen und der oder die Aufnahmeabschnitte 31, 32 als Steckverbinder ausgebildet sein. Die Dichtungsaufnahmen 3.1, 3.2 der Dichtungsmanschette 3 sind entsprechend angepasst, um die Rohrabschnitte 10, 20 entsprechend zu beklemmen und über einen Kraftschluss der bei einer Aufnahme der Rohrabschnitte 10, 20 gespannten Dichtungsaufnahmen 3.1, 3.2 eine fluiddichte Verbindung herzustellen. Eine solche Ausführungsform eines Verbindungsstücks ist exemplarisch in Figur 2 dargestellt. Die dargestellte Ausführungsform weist Sicken auf, die im normalen Betriebsfall auf ein Rohr in Durchführungsrichtung einwirkende Kräfte aufnehmen und in das Bauteil 100 ableiten kann, in das das Verbindungsstück 2 eingefügt ist.

In Figur 2 ist das Verbindungsstück 2 gemeinsam mit brennbarem Material 51, welches als Wärmeeinleitungsmittel 50 dient, soweit in das Bauteil 100 eingefügt, dass auch ein Teil des Verschlussabschnitts 33 in die Oberseite 101 des Bauteils 100 eingelassen ist. Ein Teil des brennbaren Materials 51 ragt jedoch über die Oberseite 101 des Bauteils 100 in den darüber befindlichen Raum 200, sodass dieses brennbare Material 51 im Brandfall entflammt wird. Die hierbei freigesetzte Wärme wird über das brennbare Material 51 in das Gehäuse 5 eingeleitet, um die aufschäumende, intumeszierende Wirkung des Brandschutzmittels 4 auszulösen.

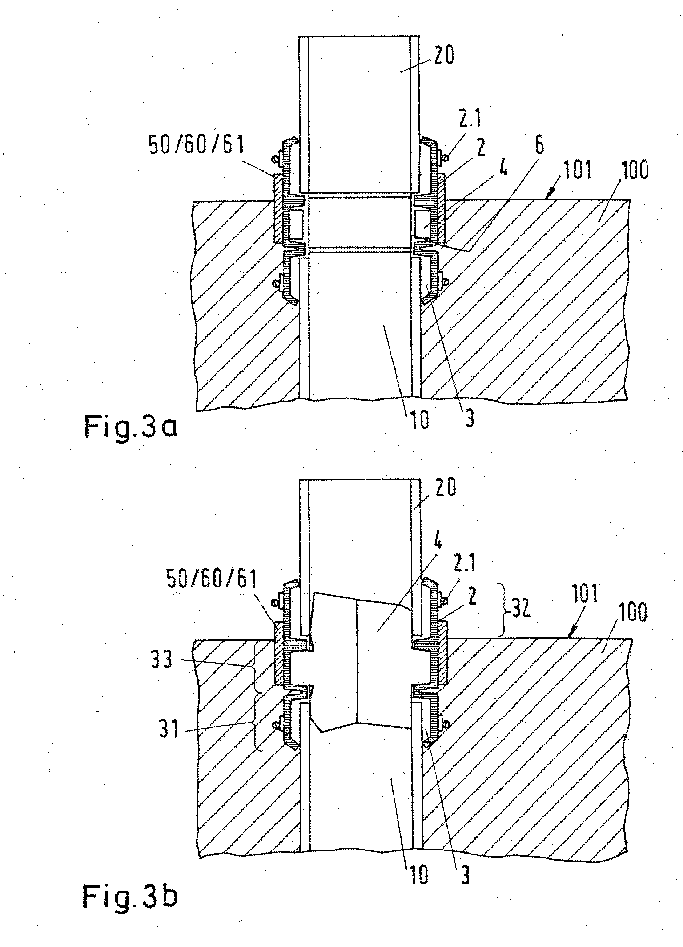

In Figuren 3a und 3b sind entsprechend der normale Betriebszustand, d. h. der Nicht-Brandfall (3a) und der Brandfall (3b) exemplarisch schematisch dargestellt. Gut zu erkennen ist in Figur 3b, dass das aufschäumende intumeszierende Brandschutzmittel 4 einen Querschnitt im Innern des Gehäuses 5 vollständig verschließt. Gegenüber dem normalen Betriebszustand, hat sich dessen Volumen stark vergrößert.

Bei dieser Ausführungsform ist ein als Rohr 61 ausgebildetes Wärmeleitelemente 60 als Wärmeeinleitungsmittel 50 anliegend an das Gehäuse 5 angeordnet, welches aus einem wärmeleitenden Metall besteht und im Brandfall eine Wärmeeinleitung in das Gehäuse 4, insbesondere in den Verschlussabschnitt 33 des Gehäuses 5 zum zeitnahen Auslösen der aufschäumenden, intumeszierenden Wirkung des Brandschutzmittels 4 bewirkt. Das Wärmeleitelement 60 ragt hierbei über die Oberseite 101 des Bauteils 100 in den darüber befindlichen Raum 200.

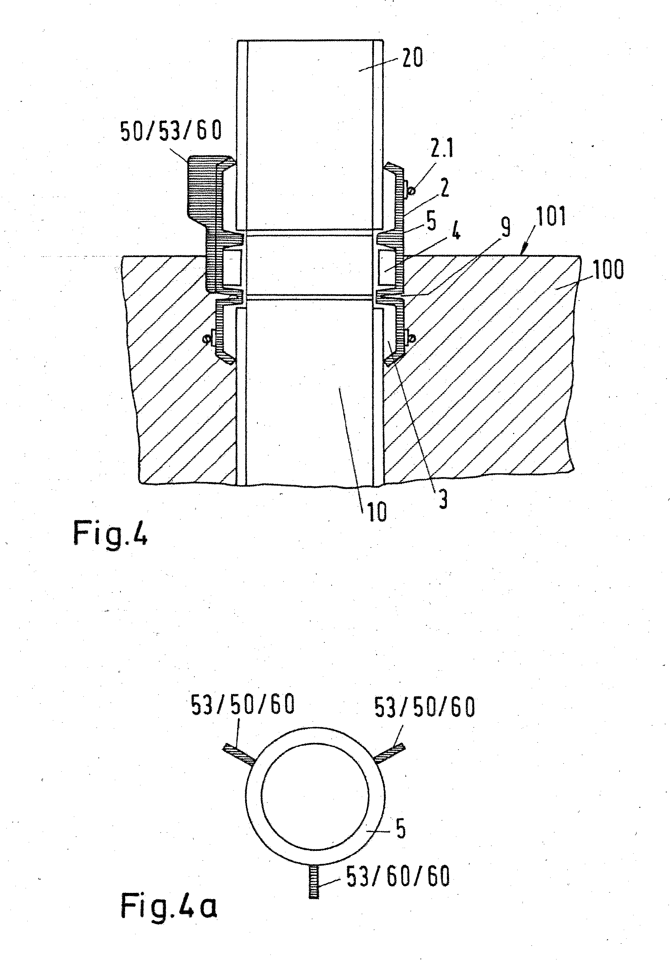

In Figur 4 ist eine weitere Ausführungsform gezeigt, bei der an das Gehäuse 5 des Verbindungsstücks 2 vorspringende Rippen 53 als Wärmeleitelemente 60 angeformt sind. Die Rippen 53 stellen somit Wärmereinleitungsmittel 50 dar.

Wie sich aus Figur 4a ergibt, sind die Rippen 53 umlaufend um das Gehäuse 5 an dieses angeformt oder an diesem befestigt. Die Anzahl der Rippen 53 kann variieren.

Das Material der Rippen 53 weist vorzugsweise eine höhere Wärmeleitfähigkeit als das Material des Gehäuses 5 auf. Bei der dargestellten Ausführungsform sind die Rippen nur entlang des einen Verschlussabschnitts 33 und des einen Aufnahmeabschnitts 32 ausgebildet. Andere Ausführungsformen können Rippen entlang beider Aufnahmeabschnitte 31, 32aufweisen. Die Rippen können sich über einen Teil der Lände des Gehäuses, die gesamte Länge des Gehäuses des Verbindungsstücks oder noch über dessen Ende oder dessen Enden hinaus erstrecken.

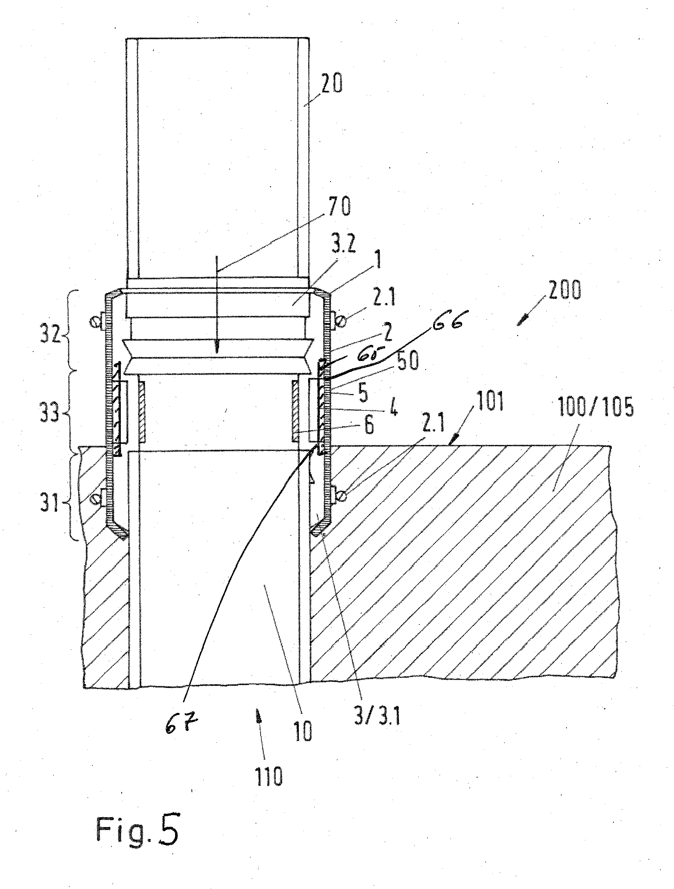

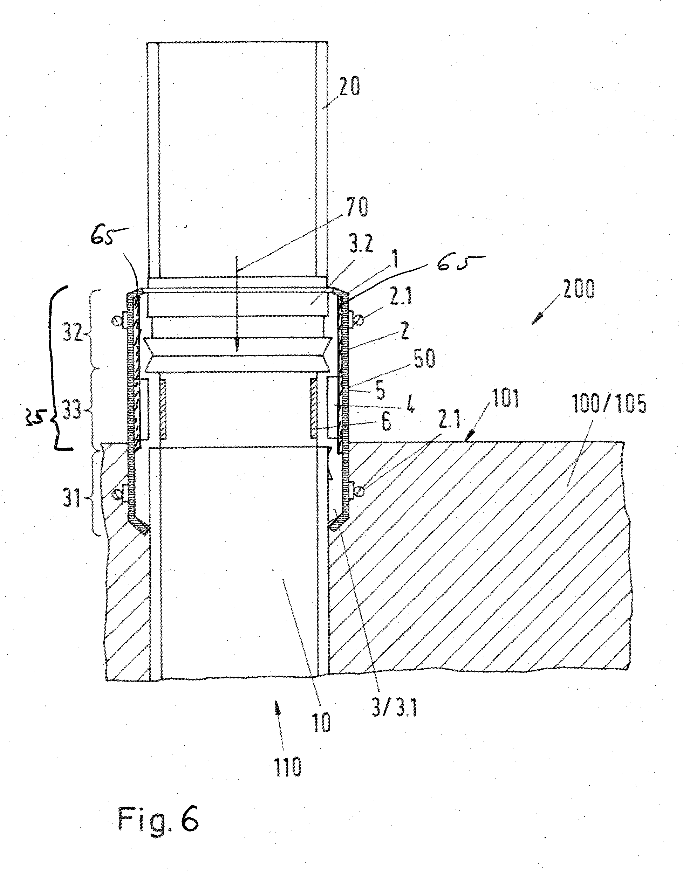

Die Ausführungsformen der Figuren 5 und 6 sind jeweils nur im Betriebsfall dargestellt. Sie gleichen bis auf die hier beschriebenen Abweichungen dem Aufbau der Ausführungsform nach Figur 1. Zusätzlich weisen die Ausführungsformen jeweils ein Wärmeübertragungselement 65 auf.

Bei der Ausführungsform nach Figur 5 ist ein Kupferblech als Wärmeübertragungselement 65 zwischen dem Gehäuse 5 und dem Brandschutzmittel 4 eingefügt. Das Kupferblech kann als Rohr umlaufend um das Brandschutzmittel 4 ausgebildet sein, Es kann aber auch nur einen Abschnitt, das heißt einen Kreis- oder Zylinderabschnitt des Gehäuses in Bereich des Verschlussabschnitts 33 des Gehäuses überdecken. Der Verschlussabschnitt ist jener Abschnitt in axialer Richtung in dem das Brandschutzmittel 4 angeordnet ist. Vorzugsweise überdeckt das Wärmeübertragungselement 65 den vollen Umfang oder mindestens 350° des Umfangs des Verschlussabschnitts 33. Das Wärmeübertragungselement 65 kann beispielsweise als geschlitztes Rohr ausgebildet sein, so dass es leicht vorgespannt in den Verschlussabschnitt 33 eingelegt werden kann und sich aufgrund der Vorspannung radial von innen an das Gehäuse 5 anpresst. Eine Außenseite 66 des Wärmeübertragungselements 65 ist in thermischem Kontakt mit dem Gehäuse 5, eine Innenseite 67 des Wärmeübertragungselements 65 mit dem Brandschutzmittel 4.

Bei der Ausführungsform nach Figur 6 ist das Wärmeübertragungselement 65 als Beschichtung auf einer Innenseite des Gehäuses 5 aus einem Material mit erhöhter Wärmeleitungsfähigkeit gegenüber dem Material des Gehäuses 5 ausgebildet. Vorzugsweise ist die Beschichtung aus Kupfer. Beschichtet ist ein Axialabschnitt 35 der den einen Aufnahmeabschnitt 31 und den Verschlussabschnitt 33 umfasst. Bei anderen Ausführungsformen ist das Gehäuse im Axialabschnitt 35 auch Außen beschichtet. Wieder andere Ausführungsformen sehen eine vollständige Beschichtung des Gehäuses mit dem Wärmeübertragungselement vor und an der Innenseite und gegebenenfalls auch an der Außenseite des Gehäuses vor.

Es versteht sich für den Fachmann, dass hier lediglich beispielhafte Ausführungsformen beschrieben sind. Die in den unterschiedlichen Ausführungsformen verwirklichten Merkmale können beliebig kombiniert werden, um die Erfindung auszuführen.

### Bezugszeichen

- 1: Brandschutzsystem
- 2: Verbindungsstück
- 2.1: Schrauben
- 3: Dichtungsmanschette
- 3.1, 3.2: Dichtungsaufnahme
- 4: Brandschutzmittel
- 5: Gehäuse
- 6: Schutzrohr
- 9: Sicken
- 10,20: Rohrabschnitt
- 31, 32: Aufnahmeabschnitt
- 33: Verschlussabschnitt
- 35: Axialabschnitt
- 50: Wärmeeinleitungsmittel
- 51: brennbares Material
- 53: Rippe
- 60: Wärmeleitelemente
- 65: Wärmeübertragungselement
- 66: Außenseite
- 67: Innenseite
- 70: Schwerkraftrichtung
- 100: Bauteil eines Gebäudes
- 101: Oberseite
- 110: Durchführung
- 200: Raum

## Patentansprüche

1. Brandschutzsystem (1) zum feuerbeständigen und rauchdichten Abschotten von einer Durchführung (110) durch ein quer zur Schwerkraftrichtung (70) orientiertes Bauteil (100) eines Gebäudes in Schwerkraftrichtung (70), durch welche, insbesondere senkrecht, eine miteinander verbundene brennbare Rohrabschnitte (10, 20) umfassende Rohrleitung geführt ist, umfassend:
ein Verbindungsstück (2), welches zur Verbindung mindestens zweier der Rohrabschnitte (10, 20) ausgebildet ist und dabei die zwei der Rohrabschnitte (10, 20) voneinander beabstandet,
wobei das Verbindungsstück (2)
ein nichtbrennbares Gehäuse (5) mit mindestens zwei voneinander beabstandeten Aufnahmeabschnitten (31, 32) zum Aufnehmen der mindestens zwei der Rohrabschnitte (10, 20) und einem hierzwischen angeordneten Verschlussabschnitt (33) und
in dem Gehäuse (5) angeordnetes unter Wärmeeinwirkung aufschäumendes,
intumeszierendes Brandschutzmittel (4), welches das Verbindungsstück (2) im Brandfall verschließt,
umfasst,
**dadurch gekennzeichnet, dass**
das Verbindungsstück (2) zumindest teilweise mit einem der Aufnahmeabschnitte (31, 32) zum Ausbilden einer feuerbeständigen und rauchdichten Abschottung in eine Oberseite (101) des Bauteils (100) des Gebäudes eingefügt ist und zugleich Wärmeeinleitungsmittel (50) mit einem Raum über der Oberseite (101) des Bauteils (100) des Gebäudes in Kontakt sind, um bei einem Brandfall in dem Raum (200) die Wärmeeinwirkung auf das aufschäumende, intumeszierende Brandschutzmittel (4) in dem Gehäuse (5) herbeizuführen.

2. Brandschutzsystem (1) nach Anspruch 1, **dadurch gekennzeichnet, dass** die Wärmeeinleitungsmittel (50) den Verschlussabschnitt (33) des Gehäuses (5) umfassen.

3. Brandschutzsystem (1) nach den Ansprüchen 1 und 2, **dadurch gekennzeichnet, dass** die Wärmeeinleitungsmittel (50) brennbares Material (51) umfassen, welches außen anliegend an das Gehäuse (5) so angeordnet ist, dass es im Brandfall entflammbar ist bzw. entflammt wird.

4. Brandschutzsystem (1) nach Anspruch 3, **dadurch gekennzeichnet, dass** das brennbare Material (51) zumindest teilweise mit dem Verbindungsstück (2) in die Oberseite (101) des Bauteils (100) des Gebäudes eingefügt ist.

5. Brandschutzsystem (1) nach einem der vorangehenden Ansprüche, **dadurch gekennzeichnet, dass** die Wärmeeinleitungsmittel (50) ein oder mehrere Wärmeleitelemente (60) umfassen, die an dem Gehäuse (5) des Verbindungsstücks (2) ausgebildet sind oder/oder anliegend an das Gehäuse (5) des Verbindungsstücks (2) angeordnet sind und sich jeweils in den Raum (200) oberhalb der Oberseite (101) des Bauteils (100) des Gebäudes erstrecken.

6. Brandschutzsystem (1) nach Anspruch 5, **dadurch gekennzeichnet, dass** das eine oder die mehreren Wärmeleitelemente (60) ein Rohr (61) und/oder eine Manschette und/oder eine Tafel, aus einem Wärmeleitenden Material, insbesondere aus einem Metall, umfassen.

7. Brandschutzsystem nach einem der vorangehenden Ansprüche, **dadurch gekennzeichnet, dass** das Wärmeleitende Material der Wärmeleitelemente (60) eine höhere Wärmeleitfähigkeit als das Material des Gehäuses (5) aufweist.

8. Brandschutzsystem (1) nach einem der vorangehenden Ansprüche, **dadurch gekennzeichnet, dass** der Verschlussabschnitt (33) vollständig oberhalb der Oberseite (101) des Bauteils (100) des Gebäudes angeordnet ist.

9. Brandschutzsystem (1) nach einem der vorangehenden Ansprüche, **dadurch gekennzeichnet, dass** zumindest einer der mindestens zwei Aufnahmeabschnitte (31, 32) als metallischer Spannverbinder ausgebildet ist, in dem ein entsprechend aufgenommener der Rohrabschnitte (10, 20) mittels Befestigungsmitteln (2.1) fixier- und/oder verspannbar ist.

10. Brandschutzsystem (1) nach einem der vorangehenden Ansprüche, **dadurch gekennzeichnet, dass** zumindest einer mindestens zwei der Aufnahmeabschnitte (31, 32) als Steckverbinder (2) ausgebildet ist.

11. Brandschutzsystem (1) nach einem der vorangehenden Ansprüche, **dadurch gekennzeichnet, dass** zumindest in einem Abschnitt des Verschlussabschnitts (33) ein Wärmeübertragungselement (65) zwischen dem Gehäuse (5) und dem Brandschutzmittel (4) ausgebildet ist, welches in thermischem Kontakt mit einer Innenseite des Gehäuses (5) und dem Brandschutzmittel (4) ist, wobei eine Wärmeleitfähigkeit des Wärmeübertragungselements (65) größer als die Wärmeleitfähigkeit des Materials des Gehäuses (5) ist.

12. Brandschutzsystem (1) nach Anspruch 11, **dadurch gekennzeichnet, dass** sich das Wärmeübertragungselement (65) in axialer Richtung des Gehäuses (5) über den Verschlussabschnitt (33) hinaus erstreckt.

13. Brandschutzsystem (1) nach Anspruch 11 oder 12, **dadurch gekennzeichnet, dass** das Wärmeübertragungselement (65) aus Kupfer ist.

14. Brandschutzsystem (1) nach einem der Ansprüche 11 bis 13, **dadurch gekennzeichnet, dass** das Wärmeübertragungselement (65) zumindest abschnittsweise als Blech ausgebildet ist.

15. Brandschutzsystem (1) nach einem der Ansprüche 11 bis 14, **dadurch gekennzeichnet, dass** das Wärmeübertragungselement (65) zumindest abschnittsweise als Beschichtung zumindest einer Innenseite des Gehäuses (5) ausgebildet ist.
